# EUROPÄISCHE PATENTSCHRIFT

(11) **EP 0 636 404 B1**
(45) Veröffentlichungstag und Bekanntmachung des Hinweises auf die Patenterteilung: **14.01.1998**
(21) Anmeldenummer: 94111140.3
(22) Anmeldetag: 18.07.1994
(51) Int. Cl.: B01D 71/42, B01D 67/00

(54) **Membranen aus Acrylnitril-Copolymeren, Verfahren zu ihrer Herstellung und ihre Verwendung**
Membranes made from acrylonitrile copolymers, process for their manufacture and their use
Membranes en copolymères d'acrylonitrile, procédé de leur préparation et leur utilisation

(30) Priorität: 30.07.1993 DE 4325650; 07.12.1993 DE 4341601
(43) Veröffentlichungstag der Anmeldung: 01.02.1995
(73) Patentinhaber: BAYER AG, 51368 Leverkusen (DE)
(72) Erfinder: Hildenbrand, Dr. Karlheinz, D-47802 Krefeld (DE); Dhein, Dr. Rolf, D-47800 Krefeld (DE); Ebert, Dr. Wolfgang, D-47800 Krefeld (DE); Hugl, Dr. Herbert, D-51467 Bergisch Gladbach (DE); Engelhard, Dr. Helmut, D-41539 Dormagen (DE); Dipl.-Ing. Wilken, Hans-Joachim, D-49808 Lingen (DE)

(56) Entgegenhaltungen:
- EP-A- 0 025 973
- DD-A- 260 869
- DD-A- 262 169
- DE-A- 4 021 052
- GB-A- 2 096 941
- DATABASE WPI Week 8328, Derwent Publications Ltd., London, GB; AN 83-708257 & JP-A-58 093 708 (ASAHI MEDICAL KK) 3. Juni 1983
- DATABASE WPI Week 8350, Derwent Publications Ltd., London, GB; AN 83-841299 & JP-A-58 189 241 (KANEBO KK, KANEBO GOSEN KK) 4. November 1983
- DATABASE WPI Week 8328, Derwent Publications Ltd., London, GB; AN 83-707629 & JP-A-58 092 410 (ASAHI MEDICAL KK) 1. Juni 1983

## Beschreibung

Die Erfindung bezieht sich auf permselektive, asymmetrische Membranen aus Acrylnitril-Copolymeren mit einem spezifischen Gehalt an Säuren, die zusätzlich eines oder mehrere wasserlösliche oder nicht wasserlösliche, mit dem Acrylnitril-Copolymer verträglichen weiteren Polymeren enthalten können. Die Erfindung bezieht sich weiter auf die Herstellung solcher Membranen mit Hilfe der Methode der Phaseninversion und ihre Verwendung für technische und medizinische Einsatzzwecke.

Membranverfahren haben für technische und medizinische Abtrennungen eine große Bedeutung erlangt. Membranen lassen sich sehr spezifisch an die zu lösende Aufgabe anpassen. Daher sind in der Vergangenheit eine große Anzahl von Membranen bekannt geworden. Die Notwendigkeit einer hohen spezifischen Anpassung gilt im besonderen Maße im medizinischen Bereich, wo vor allen Dingen ein hoher Komfort für den Patienten gefordert wird. Dies gilt insbesondere für Verfahren der Hämodialyse, Hämodiafiltration und Hämofiltration.

Hämodialyse, Hämodiafiltration und Hämofiltration sind bekannte Verfahren zur Entgiftung des Blutes (Blutwäsche), d.h. zur Entfernung von selbst in geringer Konzentration vorhandenen toxischen Metaboliten und überschüssigem Wasser. Bei diesen Verfahren wird das Blut aus einer Ader des Patienten durch eine künstliche Niere geleitet, in der das Blut an einer semipermeablen Membran entlang fließt. Auf der anderen Seite der Membran befindet sich eine entsprechend zusammengesetzte Spülflüssigkeit, in die die Giftstoffe durch die semipermeablen Membranen hineinwandern. Das gereinigte Blut wird dem Körper des Patienten wieder zugeführt.

Bei der Hämodialyse vollzieht sich der Transport über einen Lösungsvorgang in der Membran, dem sich ein Diffusionsschritt anschließt, während eine Hämofiltrationsmembran eine Porenmembran ist, deren Porendurchmesser die Molekulargewichtsausschlußgrenze bestimmt. Bei der Hämodiafiltration vollzieht sich der Transport, wie der Name dieses Vorgangs sagt, nach beiden genannten Prinzipien, also sowohl der Trennung über Lösungs-Diffusions-Mechanismen als auch über den Membranporendurchmesser.

Für diese Verfahren sind eine ganze Reihe von Polymeren vorgeschlagen worden, beispielsweise Celluloseacetat (NTIS Report PB 225 069), Polyacrylnitril (DE-OS 21 45 183), Polysulfon (DE-OS 22 28 537), aromatisches Polyamid oder Polyimid (DE-OS 23 42 072), Diisocyanat-Additionspolymere (DE-OS 33 41 847) und Polyamid-Mischungen (EP 305 787). Die in den genannten Veröffentlichungen beschriebenen Membranen haben alle infolge ihres chemischen Aufbaues und ihrer architektonischen Struktur spezifische Nachteile, wie mangelnde Festigkeit, mangelnde Hämocompatibilität, zu hohe bzw. zu niedrige Wasseraufnahme, mangelnde thermische Beständigkeit (wichtig bei der Sterilisation mit Heißdampf), wasserlösliche bzw. blutlösliche, schädliche Additive, mangelnde Fehlstellenfreiheit, wie Stippen, Gelkörper und ähnliches, die nach der Fällung Löcher in der Membran hervorrufen, mangelnde chemische Beständigkeit bzw. die unerwünschte Notwendigkeit, daß zur Erreichung von akzeptablen dialytischen Permeabilitäten mit hydrophilen Polymeren verschnitten/legiert werden muß.

Hieraus resultiert die grundlegende Forderung, insbesondere für die Blutwäsche stets neue Membranen zu entwickeln, die dem Patienten einen weiter verbesserten Komfort und einen vergrößerten Einsatzbereich bei geringstem Risiko und geringster Belastung während der Behandlung bieten.

Neben dem oben bereits erwähnten Polyacrylnitril sind auch bereits Acrylnitril-Copolymere, wie Acrylnitril-Vinylacetat-Copolymer, zur Membranherstellung eingesetzt worden (US 4.084.036). Membranen aus diesem Material werden hergestellt unter Verwendung von Dimethylacetamid als Lösungsmittel und wäßrigem Dimethylacetamid als Fällungsmittel; zusätzlich wird bei der Herstellung von Hohlfasermembranen ein Injektionsmittel aus wäßrigem Ethylenglykol eingesetzt.

Die Erfindung betrifft Membranen, bestehend zu 60-100 % ihres Gesamtgewichts aus einem Acrylnitril-Copolymer A) und zu 40-0 % ihres Gesamtgewichts aus einem mit A) verträglichen Polymer B),
wobei A) die Zusammensetzung in Gewichtsprozent, bezogen auf das Gesamtgewicht von A), wie folgt hat:
A1) 70 - 95 % Acrylnitril,
A2) 0 - 1 % Methallylsulfonsäure oder deren Alkalimetallsalz und
A3) 5 - 30 % eines Comonomeren aus der Gruppe der nicht ionischen Vinyl-und (Meth)Acrylsäure-Derivate,

wobei A) weiterhin ein mittleres Molgewicht, bestimmt als Zahlenmittel Mₙ, von 30-150 kg/Mol, bevorzugt 40-100 kg/Mol, besonders bevorzugt 45-90 kg/Mol, einen Gehalt an starken Säuren von 2-100 mVal/kg, bevorzugt 10-90 mVal/kg und einen Gehalt an Gesamtsäure von 10-160 mVal/kg, bevorzugt von 50-150 mVal/kg, hat
und B) eines oder mehrere wasserlösliche Polymere aus der Gruppe von Polyvinylpyrrolidon (PVP) sowie Copolymerisate aus Vinylpyrrolidon mit (Meth)acrylaten oder mit Vinylethern, Verseifungsprodukten von Poly-(meth)acrylaten, Polyvinylalkohol, Poly-2-oxazolin, Copolymere von Maleinsäureanhydrid mit Vinylether, Styrol oder Isobutylen sowie deren Umsetzungsprodukte und Polystyrol-sulfonsäure oder deren Alkalisalze oder nichtwasserlösliche Polymere aus der Gruppe von Poly-C₁-C₄-(hydroxy)-alkyl-(meth)acrylaten, Ethylen-Vinylacetat-Copolymeren und von A) verschiedene Acrylnitril-(Co)-Polymeren darstellt.

In bevorzugter Weise bestehen die erfindungsgemäßen Membranen zu 70-100 % aus A). In weiterhin bevorzugter Weise hat der Bestandteil A) der erfindungsgemäßen Membranen die Zusammensetzung in Gewichtsprozent, bezogen auf das Gesamtgewicht von A), wie folgt:
A1) 80 - 95 %,
A2) 0 - 1 % und
A3) 5 - 20 %, besonders bevorzugt
A1) 88 - 94 %,
A2) 0 - 0,8 % und
A3) 6 - 12 %.

Als nicht ionische Comonomere für das Acrylnitril-Copolymer A) kommen solche aus der Gruppe der Vinyl- und (Meth)Acrylsäure-Derivate in Betracht, wie Vinylacetat, Vinylpropionat, Vinylalkohol, Vinyl-C₁-C₄-alkylether, (Meth)Acrylsäureamid und (Meth)Acrylsäure-C₁-C₄-alkyl-ester. In besonders bevorzugter Weise wird als Kombination A1)/A3) eine der folgenden Monomeren-Kombinationen eingesetzt: ACN/Vinylacetat, ACN/Vinylpropionat, ACN/Vinylacetat/Vinylalkohol oder ACN/Vinylpropionat/Vinylalkohol. In besonders bevorzugter Weise wird die monomeren Kombination ACN/Vinylacetat oder ACN/Vinylpropionat, ganz besonders bevorzugt ACN/Vinylacetat eingesetzt. Für den Fall, daß als Comonomer Vinylalkohol vorliegt, wird ein solches Copolymer durch teilweise oder vollständige Verseifung von Vinylacetat oder Vinylpropionat-Comonomer nach erfolgter Polymerisation in üblicher Weise hergestellt.

Das Acrylnitril-Copolymer A) hat ein mittleres Molgewicht, bestimmt als Zahlenmittel Mₙ, von 30-150 kg/Mol, bevorzugt 40-100 kg/Mol, besonders bevorzugt von 45-90 kg/Mol. Es hat ferner einen Gehalt an starken Säuren von 2-100 mVal/kg, bevorzugt 10-90 mVal/kg, und einen Gehalt an Gesamtsäure von 10-160 mVal/kg, bevorzugt von 50-150 mVal/kg.

Die Herstellung von Acrylnitril-Copolymere A) erfolgt nach den dem Fachmann geläufigen Methoden der Emulsions-, Fällungs- und Lösungspolymerisation, wobei vorzugsweise die Fällungspolymerisation in Wasser oder die Lösungspolymerisation in den bekannten Lösungsmitteln für Polyacrylnitril angewandt werden. Als Initiatoren setzt man dabei Peroxide, Azoverbindungen, gegebenenfalls in Kombination mit molgewichtsregelnden Substanzen ein, wenn man in Fällungsmitteln oder in Lösung arbeitet, besonders häufig aber Redox-Systeme, wenn in Wasser polymerisiert wird. Solche Systeme, z.B. auf Basis von Persulfat/Sulfit bzw. Persulfat/Bisulfit, Chlorat/Sulfit oder Wasserstoffperoxid/Mercaptan, Wasserstoffperoxid/Sulfinsäure werden bei pH-Bereichen des wäßrigen Mediums von 1,5-5,5, vorzugsweise 2-3,5, verwendet und durch geringste Mengen von Schwermetallen, wie Fe^{2/3+}, Cu^{1/2+} in ihrer Effektivität verbessert.

Charakteristisch für einige der aufgeführten Redox-Initiatoren, wie beispielsweise Persulfat/Sulfit-Bisulfit ist der Einbau von sauren Funktionen (wahrscheinlich in Form von -CH₂-CH₂-SO₃⁻ oder deren Alkalisalzen) am Anfang und/oder Ende der Polymerketten, so daß solche ionischen Funktionen den Polymeren inherent sind. Je nach Reaktionsbedingungen während der Polymerisation kann in Abhängigkeit von Temperatur, Reaktorverweilzeit und pH-Wert des wäßrigen Milieus eine geringe Hydrolyse der Nitrilfunktionen des Monomer oder Polymer erfolgen und Carbonsäureamid- oder Carbonsäure-Funktionen ergeben, so daß auch dadurch im Polymer inherente ionische Funktionen entstehen. Die zuerst genannten Säurefunktionen, die durch Start- oder Abbruch-Reaktionen mit dem Initiator gebildet werden, stehen in Zusammenhang mit dem Molgewicht des Polymeren: Ein hohes Molgewicht weist eine geringere Zahl solcher Endgruppen auf als ein niedrigeres Molgewicht des Polymers bei gleichen Comonomer-Zusammensetzungen. Setzt man Redox-Systeme, die stark saure Radikalionen bilden, die sich im Polymer wiederfinden, ein, wie beispielsweise Persulfat/Sulfit, so kann man durch Losen des Polymer, Versetzen einer solchen Lösung mit Ionenaustauschern und anschließende Titration dieser Lösung den Gehalt an starken Säuren ermitteln und diesen Gehalt auch weiter differenzieren gegenüber dem Gehalt an Gesamtsäure, der den Gehalt an schwachen Säuren (Carboxylgruppen) umfaßt. Ein geringer Gehalt an Comonomer A2) findet sich bei der Bestimmung der starken Säure als Summe dieser kettenständigen und endständigen Sulfonsäuregruppen bzw. deren Salze. Der Gehalt an starken und schwachen Säuren bewegt sich im oben angegeben Bereich.

Die Steuerung der obengenannten Molgewichtsbereiche erfolgt über die Initiatormenge im Verhältnis zu den Comonomeren, über die Relation des Oxidationsmittels/Reduktionsmittels, über die Temperatur und über Schwermetallspuren. Diese Zusammenhänge sind dem Fachmann bekannt; die (Co)Polymerisation des Acrylnitrils ist beispielsweise in Houben-Weyl, Band E20, Teil 2, Seiten 1192ff., Georg Thieme Verlag Stuttgart/New York, beschrieben.

Die erfindungsgemäßen Membranen können neben dem Gehalt an Acrylnitril-Copolymer A) einen Gehalt an einem oder mehreren wasserlöslichen oder nicht wasserlöslichen, mit A) verträglichen Polymer B) enthalten. Für den Fall eines solchen Gehalts beträgt der Anteil von B) 0-40 %, bevorzugt 0,1-40 Gew.-%, besonders bevorzugt 0,1-30 Gew.-% B), bezogen auf das Gesamtgewicht der Membranen.

Wasserlösliche Polymere B) sind solche aus der Gruppe von Polyvinylpyrrolidon (PVP) sowie Copolymerisate aus Vinylpyrrolidon mit (Meth)-acrylaten oder mit Vinylethern, Verseifungsprodukten von Poly-(meth)acrylaten, Polyvinylalkohol, Poly-2-oxazolin, Vinylether- bzw. Styrol-Maleinsäureanhydrid-Copolymere sowie deren Umsetzungsprodukte und Polystyrolsulfonsäure oder deren Alkalisalze. Solche Polymere sind bekannt und werden erfindungsgemäß im Molekulargewichtsbereich, bestimmt als Zahlenmittel Mₙ, von 5 000-400 000, bevorzugt 20 000-200 000, eingesetzt. Als nicht wasserlösliche Polymere B) können solche aus der Gruppe von Poly-C₁-C₄-(hydroxy)alkyl-(Meth)acrylaten, Ethylen-Vinylacetat-Copolymeren oder anderen Acrylnitril-(Co)Polymeren, die von A) verschieden sind, eingesetzt werden. Auch solche Polymere sind bekannt und stellen handelsübliche Produkte dar; sie werden erfindungsgemäß im Molgewichtsbereich, bestimmt als Zahlenmittel Mₙ, von 5 000-200 000, bevorzugt von 20 000-100 000, eingesetzt. Mit Hilfe zusätzlich eingesetzter Polymerer B) kann eine genaue Einstellung des Umfangs der Hydrophilie bzw. der Hydrophobie einer erfindungsgemäßen Membran vorgenommen werden.

Nicht erfindungsgemäße, jedoch mögliche Zusätze in den erfindungsgemäßen Membranen sind fein verteilte anorganische Füllstoffe oder auch Farbmittel zur Kennzeichnung. Solche Zusätze sind grundsätzlich aus DE-OS 21 40 310 und DE-OS 31 41 672 bekannt. Füllstoffe und Pigmente kommen im wesentlichen bei Membranen für technische Einsatzzwecke und weniger bei Membranen für medizinische Einsatzzwecke in Frage.

Die erfindungsgemäßen Membranen können in verschiedener äußerer Form ausgebildet werden, beispielsweise als Flachmembran, Hohlfasermembran oder Rohrmembran. Solche Membranen werden in bekannter Weise zu handhabbaren Modulen verarbeitet. In bevorzugter Weise, insbesondere für medizinische Anwendungen, werden die erfindungsgemäßen Membranen in Form von Hohlfasern hergestellt.

Die Erfindung betrifft weiterhin ein Verfahren zur Herstellung von Membranen der oben beschriebenen Art, das dadurch gekennzeichnet ist, daß ein Acrylnitril-Copolymer A) der oben beschriebenen Art und gegebenenfalls ein mit A) verträgliches Polymer B) der oben beschriebenen Art in einem organischen Lösungsmittel oder einem Gemisch mehrerer Lösungsmittel gelöst werden und diese Lösung im Zustand der Lösung oder im Gelzustand, der durch Aufkonzentrieren oder Abkühlen dieser Lösung erhalten wird, mit einem Fällungsmittel behandelt wird, wobei das(die) organische(n) Lösungsmittel die Polymeren lösen kann und mit dem Fällungsmittel beliebig mischbar ist und das Fällungsmittel die Polymeren nicht löst.

Die erfindungsgemäß auszubildenden Membranformen einer Flachmembran, Hohlfasermembran oder Rohrmembran, bevorzugt Hohlfaser- und Flachmembran, werden durch Verarbeitung der Lösung von A) und gegebenenfalls B) mit Hilfe eines Rakels oder eines Extruders erreicht.

Flachmembranen oder Rohrmembranen können hierzu in bekannter Weise auch auf Trägern aufgebracht werden, wie Polymervliesen oder Polymergeweben, beispielsweise solchen aus Polyester, Polyamid, Polyethylen, Polypropylen, Polyacrylnitril oder Polyphenylensulfid. In diesen Fällen erhält man auf den Vliesen bzw. Geweben haftende (trägergestützte) Membranen. Die Träger sind hierbei maschenförmig oder mindestens hochporös ausgebildet, so daß sie lediglich Stützfunktionen ausüben, aber den Durchfluß durch die Membran nicht oder nicht wesentlich behindern.

Trägerfreie Membranen erhält man durch Beschichten von inerten, nicht porösen Unterlagen, beispielsweise Polyesterfolien oder silikonisierten Papieren, wobei sich die Membran während der Koagulation (Fällung) vom Trägersubstrat ablöst. Auch durch "Vorhanggießen" mit Hilfe von Schlitzgießern direkt ins Koagulations-(Fällungs)bad können trägerfreie Membranen erhalten werden.

Zur Herstellung von Hohlfasermembranen wird die Polymerlösung in ebenfalls bekannter Weise durch eine Ringdüse extrudiert und von der inneren, der äußeren oder von beiden Seiten der Hohlfaser mit Fällungsmittel behandelt; durch das Innere der Hohlfaser kann auch ein Inertgas oder eine Inertflüssigkeit, die das Polymer nicht löst, geleitet werden.

Geeignete Lösungsmittel für die Herstellung der Lösung aus dem Acrylnitril-Copolymer A) und dem mit A) verträglichen Polymer B) sind polare, aprotische Lösungsmittel, beispielsweise N-Methyl-pyrrolidon (NMP), Dimethylformamid (DMF), Dimethylacetamid (DMAc), γ-Butyrolacton, Propylencarbonat, Ethylencarbonat N-Methyl-caprolactam (NMC), Dimethylsulfoxid (DMSO) und N-(Hydroxy-C₁-C₄-alkyl)-pyrrolidone sowie weitere Lösungsmittel der genannten polaren, aprotischen Art. Sie können sowohl allein als auch als Gemisch mehrerer von ihnen eingesetzt werden. Diesen Lösungsmitteln ist der hohe Siedepunkt und ein Lösungsmittelparameter im Bereich von etwa 8,5-14,5 (cal/cm³)^{1/2} gemein. NMP, NMP-Gemischen, DMAc/DMF-Gemischen oder DMSO/DMF-Gemischen ist ferner gemein, daß sie in Kombination mit dem weiter unten als Fällungsmittel genannten Wasser aus den Polymergemischen von A) und B) porenfreie Membranen der oben beschriebenen Art herzustellen gestatten; hierzu wird bevorzugterweise NMP als Lösungsmittel eingesetzt. Fällungsmittel für das erfindungsgemäße Verfahren sind solche, die mit dem Lösungsmittel beliebig mischbar sind, die aber das Acrylnitril-Copolymer A) und gegebenenfalls das Polymer B) für den Fall, daß es sich hierbei um ein nicht wasserlösliches Polymer handelt, nicht lösen und für den Fall, daß es sich bei B) um ein wasserlösliches Polymer handelt, aus der Kombination von A) und B) nur zu einem Teil herauslösen. Solche Lösungsmittel sind Wasser und niedere Alkohole, wie Methanol, Ethanol, Propanol, Isopropanol, Butanol oder Isobutanol, bevorzugt Wasser oder Wasser/Alkanol-Mischungen. Dem Wasser, dem Alkanol oder einer Wasser/Alkanol-Mischung kann auch ein Anteil von bis zu 20 %, bevorzugt bis zu 10 %, an einem oder mehreren der obengenannten aprotischen Lösungsmittel zugesetzt werden.

Zur Herstellung der Polymerlösung von A) und gegebenenfalls B) im aprotischen Lösungsmittel können weiterhin 1-10 Gew.-%, bezogen auf das Gesamtgewicht des Polymers (der Polymere) in der Polymerlösung, an Lithiumchlorid oder Calciumchlorid zugesetzt werden.

Beide Varianten des erfindungsgemäßen Herstellungsverfahrens für Membranen, nämlich die durch Fällung aus der Lösung und die durch Fällung aus dem Gelzustand werden gemeinsam als Phaseninversionsmethode bezeichnet. Zeiten und Temperaturen für die Gelierung und den Kontakt mit dem Fällungsmittel sind die unten angegebenen.

Die Comonomeren sind im Polymer statistisch verteilt. Lediglich aus der Katalyse stammende -CH₂-CH₂SO₃H-Gruppen, die auch als Alkalimetallsalz oder als Eisensalz (sofern Fe-Ionen im Initiatorsystem verwendet werden) vorliegen können, treten nur an den Enden der Polymerketten auf.

Die Erfindung betrifft in bevorzugter Weise ein Verfahren zur Herstellung von Membranen der oben beschriebenen Art, das dadurch gekennzeichnet ist, daß ein ACN-Copolymer A) der oben beschriebenen Art und gegebenenfalls ein mit A) verträgliches Polymer B) der oben beschriebenen Art in einem Lösungsmittel, bestehend aus NMP, einem Gemisch von mindestens 50 Gew.-% NMP und einem oder mehreren Lösungsmitteln aus der Gruppe von γ-Butyrolacton, Propylenglykolcarbonat, Ethylenglykolcarbonat, N-C₁-C₄-Alkyl-morpholin, NMC, DMF, DMAc und DMSO, einem Gemisch aus 50-95 Gew.-% DMAc und 50-5 Gew.-% DMF oder einem Gemisch aus 50-95 Gew.-% DMSO und 50-5 Gew.-% DMF, gelöst wird, wobei übliche Additive zugesetzt werden können, die Lösung mit Hilfe eines Rakels oder eines Extruders zu einer Flachmembran, Hohlfasermembran oder Rohrmembran verarbeitet wird, und in einer Zeit von 0-15 min nach dieser Verarbeitung bei 10-80°C, bevorzugt 15-60°C, besonders bevorzugt 15-35°C, mit Wasser als Fällungsmittel zur Entfernung des Lösungsmittels in Kontakt gebracht wird.

Der Polymergehalt in der Gießlösung beträgt 10-30 Gew.-%, bezogen auf das Gesamtgewicht dieser Lösung, wobei eine Viskosität im Bereich von 2-100 Pas eingehalten werden kann. Für die Extrusion, beispielsweise aus Ringdüsen zur Herstellung von Hohlfasermembranen kann die gleiche Konzentration eingehalten werden; für die Extrusion aus Breitschlitzdüsen kann der Konzentrationsbereich auch höher liegen, beispielsweise 15-45 Gew.-%, bezogen auf das Gesamtgewicht der Extrusionslösung.

In der bevorzugten Verfahrensvariante ist die durchzuführende Fällung (Koagulation) des Polymers aus der Gieß- bzw. Extrusionslösung mit Wasser als Fällungsmittel von besonderem Vorteil. Diese Fällung mit Wasser kann im Anschluß an die Verarbeitung der Polymerlösung durch Gießen oder Extrusion nach einer Zeit von 0-15 min durchgeführt werden. Die Untergrenze 0 bedeutet hierbei eine unmittelbare Behandlung der Polymerlösung mit Wasser. Von 0 abweichende Werte bedeuten das Einhalten einer entsprechenden Zeit zwischen Gießen bzw. Extrusion und der Fällung, während der ein Teil des Lösungsmittels verdampft werden kann. (Fällung aus der Gelphase heraus). Während der angegebenen Zeit kann auch eine Abkühlung der gegossenen oder extrudierten Polymerlösung um 10-50°C erfolgen, wobei die Lösung in die Gelphase übergehen kann.

Beim Einsatz anderer als der bevorzugt genannten Lösungsmittel sind gemäß Stand der Technik stets kompliziert zusammengesetzte Gemische als Fällungsmittel benutzt worden, ganz offenbar, weil nur hierdurch brauchbare Membranen erzielt werden konnten. Im Falle der Verwendung der bevorzugten Lösungsmittel, nämlich der Verwendung von NMP, NMP-Gemischen, DMAc/DMF-Gemischen oder DMSO/DMF-Gemischen der genannten Art, oder als hauptsächliche Lösungsmittelkomponente kann in vorteilhafter Weise Wasser allein als Fällungsmittel eingesetzt werden. Bei kontinuierlichem Zulauf von Frischwasser zum Fällungsbad kann somit in einfacher Weise die Zusammensetzung dieses Fällungsbades konstant gehalten werden, was bei kompliziert zusammengesetzten Fällungsbädern gemäß Stand der Technik wesentlich aufwendiger ist. Der Gehalt an organischem aprotischen Lösungsmittel im Fällungsbad kann auf diese Weise unter 5 Gew.-%, bevorzugt unter 2 Gew.-%, des aprotischen Lösungsmittel im gesamten Fällungsbad gehalten werden.

Bei den bevorzugt eingesetzten NMP-Lösungsmittelgemischen beträgt der Gehalt an NMP mindestens 50 Gew.-% des gesamten Lösungsmittels. Neben dem NMP können noch andere polare, aprotische Lösungsmittel aus der Gruppe von γ-Butyrolacton, Propylencarbonat, Ethylencarbonat, NMC, N-C₁-C₄-Alkyl-morpholin, DMF, DMSO, DMAc, N-(C₂-C₄-alkyl)pyrrolidone bzw. N-(Hydroxy-C₂-C₄-alkyl)pyrrolidone oder mehrere aus dieser Gruppe eingesetzt werden.

DMAc/DMF- bzw. DMSO/DMF-Gemische werden mit Anteilen von 50-95 Gew.-%, bevorzugt 70-90 Gew.-% DMAc bzw. DMSO und 50-5 Gew.-%, bevorzugt 30-10 Gew.-% DMF, eingesetzt.

Die Erfindung betrifft ferner die Verwendung der oben beschriebenen Membranen für technische und medizinische Einsätze, bevorzugt zur Hämodialyse, Hämodiafiltration, Reversosmose und Nanofiltration, besonders bevorzugt zur Hämodialyse.

Die erfindungsgemäßen Membranen weisen eine Ultrafiltrationsrate UF[ml/h ^{.} m² ^{.} mm Hg] im Bereich von 2-30 und eine Chloridpermeabilität [cm/s ^{.} 10⁻⁴] im Bereich von 5-14 auf. Die vorliegende Erfindung ermöglicht insbesondere die gezielte Modifizierung der Membranoberfläche im Hinblick auf geringe Proteinadsorption, die bekanntermaßen entscheidend für die Blutverträglichkeit (Hemo- bzw. Biocompatibilität) ist.

Wie in Dialyse-Journal 36/1991 ausführlich beschrieben, sind die folgenden physikochemischen Parameter entscheidend für die Proteinadsorption:
- Chemische Struktur der Materialoberfläche
- Oberflächenspannung bzw. Oberflächenenergie
- Hydrophilie/Hydrophobie
- Mechanische Oberflächenstruktur
- Elektrostatische Ladung (Zeta-Potential).

Darüber hinaus sind Membranoberflächen mit spezifischen Adsorptionseigenschaften (Bindung von Endotoxinen) von Interesse.

Wie die folgenden Beispiele zeigen, ist eine gezielte Einstellung dieser physikochemischen Parameter möglich durch Abmischen von Polyacrylnitrilen mit unterschiedlichen Sulfonatgehalten oder durch Blending von Polyacrylnitrilen mit hydrophilen, in der Regel wasserlöslichen Polymeren, wobei insbesondere auf die hydrophile Blending-Komponente Maleinsäureanhydrid-Vinylether-Copolymer (Gantrez AN, Fa. ISP) verwiesen werden soll. Durch Umsetzen der Polymeranhydridgruppen mit nieder- oder hochmolekularen OH- oder NH-Verbindungen lassen sich leicht die oben erwähnten physikochemischen Parameter im Hinblick auf gute Blutverträglichkeit gezielt einstellen.

### Beispiele

Die Ultrafiltrationsrate der Membranen wird bestimmt durch Messung des Flüssigkeitsvolumens, das bei gegebener Druckdifferenz bei einer Temperatur von 37°C durch eine bei gegebener Apparatur festgelegte Membranfläche durch die Membran tritt und das zur allgemeinen Vergleichbarkeit auf Flächeneinheit, Zeiteinheit und Druckeinheit normiert wird. Als Flüssigkeit zur Bestimmung der Ultrafiltrationsrate wird Wasser verwendet. Die Methode ist u.a. beschrieben in "Evaluation of Hemodialyzers and Dialysis Membranes" des U.S. Department of Health, Education and Welfare, DHEW Publication No (NIH) 77-1294, S. 24-26.

Als Testsubstanz für die Urämiegifte dient Natriumchlorid. Gemessen wird die diffuse, drucklose Konzentrationsänderung zweier unterschiedlich konzentrierter Ausgangslösungen zu beiden Seiten der Membran mit der Zeit mittels einer Kaufmann-Leonhard-Zelle. Die Cl-^{⊖}-Konzentration in beiden Zellen kann leicht über Leitfähigkeitsmessungen ermittelt werden.

### Beispiel 1

35,0 g des Copolymers Acrylnitril/Vinylacetat (92,5:7,5 als Gewichtsverhältnis) wurden mit Hilfe eines KPG-Rührers in 165,0 g N-Methyl-pyrrolidon (NMP) gelöst.
Lösebedingungen: 40°C, 4 Stunden
Viskosität: 40 Pa^{.}s [20°C], Rotationsviskosimeter

Nach dem Entgasen wurde die Gießlösung mit Hilfe eines Rakels auf eine Glasplatte zu einem Film mit 50 µm Naßauftrag beschichtet. Die beschichtete Glasplatte wurde anschließend senkrecht in ein Wasserbad (20°C) hineingestellt.

Nach 20 Minuten Verweilzeit im Wasserbad wurde die von der Glasplatte abgelöste Membran hinsichtlich Ultrafiltration und dialytischer Permeabilität untersucht.
UF-Wert [ml/h · m² · mm Hg] 10,9
Cl-^{⊖}-Permeabilität [cm/s · 10⁻⁴] 7,3

Membranstruktur (REM-Aufnahme): Porenfreie, aktive Trennschicht mit einer hochporösen Stützstruktur.

Diesen Daten entsprechend ist die vorliegende Membran für die Dialyse geeignet.

### Beispiel 2

### Abmischen von Polyacrylnitrilen mit unterschiedlichen Säuregehalten

- 3,9 g: des Copolymers Acrylnitril/Methacrylat/Methallylsulfonat (93,8:5,6:0,6 als Gewichtsverhältnis) mit dem Gesamtsäuregehalt von 106 mVal/kg und
- 34,6 g: des Copolymers Acrylnitril/Vinylacetat (92,5:7,5 als Gewichtsverhältnis) mit dem Gesamtsäuregehalt von 78 mVal/kg
wurden in 181,5 g NMP gelöst und wie in Beispiel 1 zu Dialysemembranen weiterverarbeitet.

Hinsichtlich Ultrafiltration und dialytischer Permeabilität wurden die folgenden Werte erhalten:
UF-Wert [ml/h · m² · mm Hg]: 30,5
Cl-^{⊖}-Permeabilität [cm/s · 10⁻⁴]: 10,7

### Beispiel 3

### Polyacrylnitril-Blend-Membran mit integriertem Tensid

Zusätzlich zu den in Beispiel 2 beschriebenen Komponenten wurden noch die folgenden Substanzen zur Herstellung der Polymergießlösung zugegeben:
- 3,9 g: Maleinsäureanhydrid/Vinylmethylether-Copolymer (Gantrez AH 179, Fa. ISP) und
- 0,4 g: PEG (20) Sorbitan-monolaurat (Tween 20®, Fa. Atlas Chemical Co.)

Es wurden folgende Membraneigenschäften ermittelt:
UF-Wert [ml/h · m² · mm Hg]: 16,1
Cl-^{⊖}-Permeabilität [cm/s · 10⁻⁴]: 11,0

## Patentansprüche

1. Membranen, bestehend zu 60-100 % ihres Gesamtgewichts aus einem Acrylnitril-Copolymer A) und zu 0-40 % ihres Gesamtgewichts aus einem mit A) verträglichen Polymer B)
wobei A) die Zusammensetzung in Gew.-%, bezogen auf das Gesamtgewicht von A), wie folgt hat:
A1) 70 - 95 % Acrylnitril,
A2) 0 - 1 % Methallylsulfonsäure oder deren Alkalimetallsalz und
A3) 5 - 30 % eines Comonomeren aus der Gruppe der nicht ionischen Vinyl- und (Meth)Acrylsäure-Derivate,
wobei A) weiterhin ein mittleres Molgewicht, bestimmt als Zahlenmittel Mₙ, von 30-150 kg/Mol, einen Gehalt an starken Säuren von 2-100 mVal/kg, und einen Gehalt an Gesamtsäure von 10-160 mVal/kg, hat
und B) eines oder mehrere wasserlösliche Polymere aus der Gruppe von Poly-vinylpyrrolidon (PVP) sowie Copolymerisate aus Vinylpyrrolidon mit (Meth)-acrylaten oder mit Vinylethern, Verseifungsprodukten von Poly(meth)acrylaten, Polyvinylalkohol, Poly-2-oxazolin, Copolymere von Maleinsäureanhydrid mit Vinylether, Styrol oder Isobutylen sowie deren Umsetzungsprodukte und Polystyrol-sulfonsäure oder deren Alkalisalze oder nichtwasserlösliche Polymere aus der Gruppe von Poly-C₁-C₄-(hydroxy)-alkyl-(meth)acrylaten, Ethylen-Vinylacetat-Copolymeren und von A) verschiedene Acrylnitril-(Co)-Polymeren darstellt.

2. Membranen nach Anspruch 1, bestehend zu 70-100 % aus A).

3. Membranen, in denen A) die Zusammensetzung in Gew.-%, bezogen auf das Gesamtgewicht von A), wie folgt hat:
A1) 80 - 95 %,
A2) 0 - 1 % und
A3) 5 - 20 %.

4. Membranen nach Anspruch 1, deren Bestandteil A3) aus einem oder mehreren nicht ionischen Monomeren aus der Gruppe von Vinylacetat, Vinylpropionat, Vinylalkohol, Vinyl-C₁-C₄-alkylether, (Meth)Acrylsäureamid und (Meth)Acrylsäure-C₁-C₄-alkyl-ester besteht.

5. Membranen nach Anspruch 1, in denen das Polymer B) im Falle der wasserlöslichen Polymere ein mittleres Molgewicht, bestimmt als Zahlenmittel Mₙ, von 5 000-400 000, und im Falle der nicht wasserlöslichen Polymere von 5 000-200 000, haben.

6. Membranen nach Anspruch 1, ausgebildet als Flachmembran, Hohlfasermembran oder Rohrmembran, gegebenenfalls unter Mitverwenden eines porösen Trägers.

7. Verfahren zur Herstellung von Membranen nach Anspruch 1, dadurch gekennzeichnet, daß ein Acrylnitril-Copolymer A) nach Anspruch 1 und gegebenenfalls ein mit A) verträgliches Polymer B) nach Anspruch 1 in einem organischen Lösungsmittel oder einem Gemisch mehrerer Lösungsmittel gelöst werden und diese Lösung im Zustand der Lösung oder im Gelzustand, der durch Aufkonzentrieren oder Abkühlen gehalten wird, mit einem Fällungsmittel behandelt wird, wobei das organische Lösungsmittel die Polymeren lösen kann und mit dem Fällungsmittel beliebig mischbar ist und das Fällungsmittel die Polymeren nicht löst.

8. Verfahren nach Anspruch 7, dadurch gekennzeichnet, daß ein ACN-Copoylmer A) gemäß Anspruch 1 und gegebenenfalls ein Polymer B) nach Anspruch 1 in einem Lösungsmittel, bestehend aus NMP, einem Gemisch von mindestens 50 Gew.-% NMP und einem oder mehreren Lösungsmitteln aus der Gruppe von γ-Butyolacton, Propylenglykolcarbonat, N-C₁-C₄-Alkyl-morpholin, N-Methyl-caprolactam (NMC), Dimethylformamid (DMF), Dimethylacetamid (DMAc) und Dimethylsulfoxid (DMSO), einem Gemisch aus 50-95 Gew.-% DMAc und 50-5 Gew.-% DMF oder einem Gemisch aus 50-95 Gew.-% DMSO und 50-5 Gew.-% DMF, gelöst wird, wobei übliche Additive zugesetzt werden können, die Lösung mit Hilfe eines Rakels oder eines Extruders zu einer Flachmembran, Hohlfasermembran oder Rohrmembran verarbeitet wird, und in einer Zeit von 0-15 min nach dieser Verarbeitung bei 10-80°C, mit Wasser als Fällungsmittel zur Entfernung des Lösungsmittels in Kontakt gebracht wird.

9. Verfahren nach Anspruch 8, dadurch gekennzeichnet, daß NMP als Lösungsmittel eingesetzt wird.

10. Verwendung der Membranen nach Anspruch 1 für technische und medizinische Einsatzzwecke.

11. Verwendung gemäß Anspruch 10 zur Hämodialyse oder Hämodiafiltration.

## Claims

1. Membranes consisting of an acrylonitrile copolymer A) to the extent of 60-100 % of their total weight and a polymer B) which is compatible with A) to the extent of 0-40 % of their total weight,
wherein A) has the composition in % by weight, based on the total weight of A), as follows:
A1) 70-95 % of acrylonitrile,
A2) 0-1 % of methallylsulphonic acid or an alkali metal salt thereof and
A3) 5-30 % of a comonomer from the group comprising nonionic vinyl and (meth)acrylic acid derivatives,
and wherein A) furthermore has an average molecular weight, determined as the number-average Mₙ, of 30-150 kg/mol, a content of strong acids of 2-100 meq/kg, and a content of total acid of 10-160 meq/kg,
and B) represents one or-more water-soluble polymers from the group comprising polyvinylpyrrolidone (PVP) and copolymers of vinylpyrrolidone with (meth)acrylates or with vinyl ethers, hydrolysis products of poly(meth)acrylates, polyvinyl alcohol, poly-2-oxazoline, copolymers of maleic anhydride with vinyl ether, styrene or isobutylene and reaction products thereof and polystyrene-sulphonic acid or alkali metal salts thereof or polymers, which are not water-soluble, from the group comprising poly-C₁-C₄-(hydroxy)-alkyl (meth)acrylates, ethylene/vinyl acetate copolymers and acrylonitrile (co)polymers which differ from A).

2. Membranes according to Claim 1, comprising A) to the extent of 70-100 %.

3. Membranes in which A) has the composition in % by weight, based on the total weight of A), as follows:
A1) 80-95 %,
A2) 0-1 % and
A3) 5-20 %.

4. Membranes according to Claim 1, the constituent A3) of which comprises one or more nonionic monomers from the group comprising vinyl acetate, vinyl propionate, vinyl alcohol, vinyl C₁-C₄-alkyl ethers, (meth)acrylamide and (meth)acrylic acid C₁-C₄-alkyl esters.

5. Membranes according to Claim 1, in which the polymer B) has an average molecular weight, determined as the number-average Mₙ, of 5,000-400,000, in the case of the water-soluble polymers and of 5,000-200,000 in the case of the polymers which are not water-soluble.

6. Membranes according to Claim 1, constructed as a flat membrane, hollow fibre membrane or tubular membrane, if appropriate co-using a porous carrier.

7. Process for the preparation of membranes according to Claim 1, characterized in that an acrylonitrile copolymer A) according to Claim 1 and, if appropriate, a polymer B) according to Claim 1 which is compatible with A) are dissolved in an organic solvent or a mixture of several solvents, and this solution is treated with a precipitating agent in the solution state or in the gel state, which is obtained by concentration or cooling, the organic solvent being able to dissolve the polymers and being miscible with the precipitating agent in all proportions and the precipitating agent not dissolving the polymers.

8. Process according to Claim 7, characterized in that an ACN copolymer A) according to Claim 1 and, if appropriate, a polymer B) according to Claim 1 are dissolved in a solvent comprising NMP, a mixture of at least 50 % by weight of NMP and one or more solvents from the group comprising γ-butyrolactone, propylene glycol carbonate, N-C₁-C₄-alkyl-morpholine, N-methyl-caprolactam (NMC), dimethylformamide (DMF), dimethylacetamide (DMAc) and dimethyl sulphoxide (DMSO), a mixture of 50-95 % by weight of DMAc and 50-5 % by weight of DMF and a mixture of 50-95 % by weight of DMSO and 50-5 % by weight of DMF, it being possible for the customary additives to be added, the solution is processed with the aid of a doctor blade or an extruder to a flat membrane, hollow fibre membrane or tubular membrane and, within a period of 0-15 minutes after this processing, the membrane is brought into contact with water as the precipitating agent for removal of the solvent at 10-80°C.

9. Process according to Claim 8, characterized in that NMP is employed as the solvent.

10. Use of the membranes according to Claim 1 for industrial and medical applications.

11. Use according to Claim 10 for haemodialysis or haemodiafiltration.

## Revendications

1. Membranes constituées, à concurrence de 60-100% de leur poids total, par un copolymère d'acrylonitrile A) et, à concurrence de 0-40% de leur poids total, par un polymère B) compatible avec A)
dans lesquelles A) possède la composition, en % en poids rapporté au poids total de A), indiquée ci-dessous:
A1) 70 - 95% d'acrylonitrile,
A2) 0 - 1% d'acide méthallylsulfonique ou d'un de ses sels de métaux alcalins,
A3) 5 - 30% d'un comonomère choisi parmi le groupe comprenant les dérivés non ioniques d'acides vinylique et (méth)acrylique,
A) possédant en outre un poids molaire moyen, déterminé comme moyenne en nombre Mₙ, de 30-150 kg/mole, une teneur en acides forts de 2-100 mEq /kg et une teneur totale en acide de 10-160 mEq /kg, et
B) représentant un ou plusieurs polymères hydrosolubles choisis parmi le groupe comprenant la polyvinylpyrrolidone (PVP), ainsi que des copolymères de vinylpyrrolidone avec des (méth)acrylates ou avec des éthers vinyliques, de produits de saponification de poly(méth)acrylates, d'alcool polyvinylique, de poly-2-oxazoline, des copolymères d'anhydride maléique avec des éthers vinyliques, du styrène ou de l'isobutylène, ainsi que leurs produits réactionnels, et d'acide polystyrène-sulfonique ou de ses sels de métaux alcalins ou encore des polymères non hydrosolubles choisis parmi le groupe comprenant des poly(méth)acrylates d'(hydroxy)alkyle en C₁-C₄, des copolymères d'éthylène-acétate de vinyle et des (co)polymères d'acrylonitrile différents de A).

2. Membranes selon la revendication 1, constituées, à concurrence de 70 à 100%, de A).

3. Membranes dans lesquelles A) possède la composition, en % en poids rapporté au poids total de A), indiquée ci-dessous:
A1) 80 - 95%,
A2) 0 - 1%, et
A3) 5 - 20%.

4. Membranes selon la revendication 1, dont le composant A3) est constitué par un ou plusieurs monomères non ioniques choisis parmi le groupe comprenant l'acétate de vinyle, le propionate de vinyle, l'alcool vinylique, des éthers vinylalkyliques en C₁-C₄, un amide d'acide (méth)acrylique et des esters alkyliques en C₁-C₄ d'acide (méth)acrylique.

5. Membranes selon la revendication 1, dans lesquelles le polymère B), dans le cas des polymères hydrosolubles, possède un poids molaire moyen, déterminé comme moyenne en nombre Mₙ, de 5000-400.000 et, dans le cas des polymères non hydrosolubles, de 5000-200.000.

6. Membranes selon la revendication 1, réalisées sous forme de membranes plates, de membranes à fibres creuses ou de membranes tubulaires, le cas échéant en utilisant de manière conjointe un support poreux.

7. Procédé pour la préparation de membranes selon la revendication 1, caractérisé en ce qu'on dissout un copolymère d'acrylonitrile A) selon la revendication 1 et éventuellement un polymère B) compatible avec A) selon la revendication 1 dans un solvant organique ou dans un mélange de plusieurs solvants, et on traite cette solution à l'état de solution ou à l'état de gel, que l'on maintient par concentration ou par refroidissement, avec un agent de précipitation, le solvant organique étant à même de dissoudre les polymères et étant miscible de n'importe quelle manière avec l'agent de précipitation, l'agent de précipitation ne dissolvant pas les polymères.

8. Procédé selon la revendication 7, caractérisé en ce qu'on dissout un copolymère ACN A) selon la revendication 1 et éventuellement un polymère B) selon la revendication 1 dans un solvant constitué par NMP, par un mélange de NMP à concurrence d'au moins 50% en poids et d'un ou plusieurs solvants choisis parmi le groupe comprenant la γ-butyrolactone, le carbonate de propylèneglycol, des N-alkyl(en C₁-C₄)morpholines, le N-méthylcaprolactame (NMC), le diméthylformamide (DMF), le diméthylacétamide (DMAc) et le diméthylsulfoxyde (DMSO), par un mélange, à concurrence de 50-95% en poids, de DMAc et, à concurrence de 50-5% en poids, de DMF ou encore par un mélange, à concurrence de 50-95% en poids, de DMSO et, à concurrence de 50-5% en poids, de DMF, dans lequel on peut ajouter des additifs habituels, on traite la solution à l'aide d'une racle ou d'une extrudeuse pour obtenir une membrane plate, une membrane à fibres creuses ou une membrane tubulaire et, pendant un laps de temps de 0-15 minutes après ce traitement, à des températures de 10-80°C, on la met en contact avec de l'eau à titre d'agent de précipitation pour éliminer le solvant.

9. Procédé selon la revendication 8, caractérisé en ce qu'on met en oeuvre la NMP comme solvant.

10. Utilisation des membranes selon la revendication 1 pour des objets de mise en oeuvre dans les domaines technique et médical.

11. Utilisation selon la revendication 10 pour l'hémodialyse ou l'hémodiafiltration.
